# EUROPEAN PATENT APPLICATION

(11) **EP 2 716 883 A1**
(43) Date of publication of application: **09.04.2014**
(21) Application number: 12789591.0
(22) Date of filing: 13.01.2012
(51) Int. Cl.: F01M 11/03, G01M 15/02

(54) **DIAGNOSTICS METHOD FOR INTERNAL COMBUSTION ENGINE PARTS**

(30) Priority: 23.05.2011 UA 2011006464
(71) Applicant: Koltunov, Georgii Anatolievich, Poltava 36014 (UA)
(72) Inventor: Koltunov, Georgii Anatolievich, Poltava 36014 (UA)
(74) Representative: Kretschmann, Dennis
(86) International application number: PCT/UA2012/000004
(87) International publication number: WO 2012/161668

(57) **Abstract**

The invention relates to internal combustion engines. The method comprises installing an oil filter with a main filter element and a filter element for a pressure relief valve, then removing said oil filter after use, opening the filter and analyzing the filtered-out products resulting from wear in respect of the qualitative and quantitative composition thereof and to ascertain the engine parts to which said products belong. The invention makes it possible to determine, during operation, the degree of wear of the parts and to increase the ecological and technical safety of the method.

## Description

### Technical field

This invention relates to the realm of industry, to wit, to the realm of machine operation, and may be applied for diagnosing technical status of internal combustion engine parts.

### Background art

Wear of engine parts significantly affects the engine's state of serviceability, operation quality, and, in the final count, its service life.

A method is known of diagnosing the degree of wear of internal combustion engine bearings that consists in determining the value of instant pressure in the central oil passage. The value of instant pressure is determined at operation during a cycle under maximum load and the following cycle without load. Upon this determination, sections are compared of the oscillogram obtained during the running cycle of the cylinder subject to diagnosing and during the idle cycle (patent of the Russian Federation No. 2399898, IPC class G01M 15/09, published on September 20, 2010).

A shortcoming of said method is the impossibility to determine the state of the engine as a whole and of all structural constituent parts thereof that are subject to wear including the technical state of filter elements, as well as the complexity of said method.

In addition, another invention is known that is related to the realm of machine operation and can be used in diagnosing the extent of wear of internal combustion engine (ICE) connecting-rod bearings. The known method of non-demountable diagnostics of the extent of internal combustion engine's connecting-rod bearing wear consists in measuring the amplitude of pressure value fluctuations in the section of the ICE central oil passage between the filter and the crankshaft bearings. Such measuring of the amplitude of pressure value fluctuations is performed for eight values of engine speed (patent of the Russian Federation No. 2390746, IPC class G01M 15/00, published on May 27, 2010).

The shortcoming of this method, as well, is the impossibility to determine the state of the engine as a whole and of all structural constituent parts thereof that are subject to wear including the technical state of filter elements; the complexity and extended duration of said method; and the low degree of environmental and technical safety.

### Contents of the Invention

The basic task of the invention is to create such a method for diagnostics of internal combustion engine parts as would allow to promptly determine the wear extent of a particular group of parts judging by quality composition of wear products and quantity thereof, providing for higher environmental and technical safety of the method.

This task is solved in the following manner: the method for diagnosing internal combustion engine parts comprises the mounting of an oil filter with a main filter element (fine filter element) and a filter element of a bypass valve (coarse filter element for purifying oil passing via the bypass valve) on the engine, with subsequent dismounting after the operation; opening up the oil filter; and analyzing the filtered-off wear products as to their qualitative and quantitative composition and their belonging to various engine parts.

If a filter of ordinary design is mounted in oil passage (with a main filter element or with a main filter element and an auxiliary filter element which does not purify oil passing via the bypass valve), then oil contamination products would pass through the bypass valve, and the contaminant contained in the filter would not provide a full picture of engine parts wear.

If the bypass valve filter element is not present in the oil filter, then in the event of a cold start or of the main filter element contamination, oil would flow unpurified directly to the engine's oil system.

An oil filter with a main filter element and a bypass valve filter element is the assembly responsible for oil purity in the engine, and therefore is the direct accumulator of engine part wear products, and serves as intermediary in conducting the non-demountable diagnostics of the engine. Should there occur the accelerated wear of some part or another, the described oil filter would prevent accelerated wear of other precision couples by retaining the wear products on filter elements in substantial volumes.

The technical result consists in improving the accuracy of assessing the technical state of an internal combustion engine and of constituent parts thereof including aluminum, plastics, cast-iron, and steel parts, sealants etc.

Cause-and-effect relation between the dominant features of this invention permits to attain the technical result indicated in the declared purpose thereof.

According to data at the applicant's disposal, the proposed aggregate of features characterizing the substance of the invention, is not known in the art; that is, the invention fits the criterion of "novelty".

### Mode of carrying out the invention

An oil purification filter is mounted (screwed on) on the engine; it must necessarily contain a main filter element and a filter element of the bypass valve. The operation of the engine starts, and the process of oil filtering begins. During the engine operation, the principal wear products accumulate on filter elements. At the time of engine technical maintenance works, the oil filter is cut open and subjected to analysis of retained wear products, targeting their qualitative and quantitative composition and their provenance from various parts of the engine.

Thus, for instance, if cast-iron is present in the retained products, this is the evidence that affected by wear have been iron cylinder liners. Where plastic is present, this means that affected by wear have been shoes or other plastic parts. Where steel is present, then affected by wear have been piston rings. Where sealant is present that means that subject to retention has been excessive sealant used in the engine assembly process.

Qualitative analysis is carried out using the known methods (chemical, physicochemical, and physical methods), e.g., spectral analysis making use of known spectral equipment.

Quantitative analysis, too, is performed making use of one of the known methods with application of known means.

Cutting the filter open is performed by any devices and equipment known in the art.

The substance of the invention is not obvious to a specialist from the state of the art. For this reason, the proposed method fits the criterion "level of invention".

Until present time, no diagnostics of internal combustion engine parts has been carried out by such method.

### Industrial Applicability

The proposed invention may be realized under workshop conditions. Utilization of the proposed method makes it possible to prevent failures during operation of internal combustion engine parts and of the engine as a whole, correctly and in a timely manner.

Therefore, the proposed technical solution fits the criterion "industrial applicability".

## Claims

1. nternal combustion engine parts diagnostics method comprising the mounting of an oil filter with a main filter element and a filter element of a bypass valve on the engine with subsequent dismounting after the operation; opening up the oil filter; and analyzing the filtered-off wear products as to their qualitative and quantitative composition and their belonging to various engine parts.
